# EUROPÄISCHE PATENTSCHRIFT

(11) **EP 1 216 568 B1**
(45) Veröffentlichungstag und Bekanntmachung des Hinweises auf die Patenterteilung: **23.02.2005**
(21) Anmeldenummer: 00975779.0
(22) Anmeldetag: 20.09.2000
(51) Int. Cl.: H04M 3/42

(54) **VERFAHREN ZUR BEHANDLUNG EINES ANKOMMENDEN ODER ABGEHENDEN RUFES ZU ODER VON EINER TEILNEHMERENDEINRICHTUNG**
METHOD FOR PROCESSING AN INCOMING OR OUTGOING CALL TO OR FROM A SUBSCRIBER TERMINAL OF A SUBSCRIBER GROUP
PROCEDE POUR TRAITER UN APPEL PROVENANT D'UN TERMINAL D'ABONNE D'UN GROUPE D'ABONNES OU UN APPEL DESTINE A UN TEL TERMINAL

(30) Priorität: 28.09.1999 DE 19946445
(43) Veröffentlichungstag der Anmeldung: 26.06.2002
(73) Patentinhaber: SIEMENS AKTIENGESELLSCHAFT, 80333 München (DE)
(72) Erfinder: SCHNEIDER, Bernd, 81479 München (DE); KLEINER, Patrick, 81476 München (DE); KRETEN, Axel, 82178 Puchheim (DE)
(86) Internationale Anmeldenummer: PCT/DE2000/003279
(87) Internationale Veröffentlichungsnummer: WO 2001/024486

(56) Entgegenhaltungen:
- EP-A- 0 980 175
- US-A- 5 422 941
- US-A- 5 841 854
- US-A- 5 920 619

## Beschreibung

Die Erfindung betrifft ein Verfahren zur Behandlung eines an eine Teilnehmerendeinrichtung einer Teilnehmergruppe ankommenden Anrufes oder eines von einer solchen Teilnehmerendeinrichtung abgehenden Rufes innerhalb einer digitalen Fernmeldevermittlungsstelle eines Telekommunikationsnetzes gemäß dem Oberbegriff des Patentanspruchs 1.

Dabei wird in der digitalen Fernmeldevermittlungsstelle bei einem ankommenden Anruf eine Verbindung geschaltet, über die Signalisierungs- und Nutzinformationen zwischen einer beliebigen rufenden Teilnehmerendeinrichtung und der den Anruf annehmenden Teilnehmerendeinrichtung der Teilnehmergruppe übertragbar sind. Im Falle eines abgehenden Rufes wird in der digitalen Fernmeldevermittlungsstelle eine Verbindung geschaltet, über die Signalisierungs- und Nutzinformationen zwischen der rufenden Teilnehmerendeinrichtung der Teilnehmergruppe und einer beliebigen gerufenen Teilnehmerendeinrichtung übertragbar sind.

Die Teilnehmerendeinrichtungen, die direkt an eine solche Fernmeldevermittlungsstelle eines Telekommunikationsnetzes über Teilnehmeranschlußleitungen angeschlossen sind, können zu einer Teilnehmergruppe zusammengefaßt werden. Den zu der Teilnehmergruppe gehörenden Teilnehmern können dann von der digitalen Fernmeldevermittlungsstelle nahezu diegleichen Leistungsmerkmale zur Verfügung gestellt werden, die ihnen eine Nebenstellenanlage (PBX) böte, wenn deren Teilnehmerendeinrichtungen an diese angeschlossen wären. Derartige Teilnehmergruppen sind beispielsweise unter den Namen Centrex-Gruppen (Centrex = Central Office and exchange) bekannt. Auch kann eine Teilnehmergruppe durch eine festgelegte Untergruppe bzw. durch ein festgelegtes Team innerhalb der Centrex-Gruppe repräsentiert werden.

Typische Leistungsmerkmale, die den Centrex-Teilnehmern bereitgestellt werden sollen und teilweise denen einer Nebenstellenanlage entsprechen, sind größtenteils in einer Kundenbroschüre "EWSD GeoCentrex: The Best Catch for Your Network" der Firma Siemens AG, Geschäftsgebiet Telekommunikationsnetze, Hofmannstr. 51, D-81359 München, herausgegeben im Jahre 1995, Bestellnr. A 30808-X3093-X100-1-7635, auf den Seiten 25-57 sowie 65-75 beschrieben, z.B:
- ein eigener gruppeninterner Numerierungsplan
- Zugang zum Telekommunikationsnetz mittels Zugangscode
- Centrex-Gruppen-Nummer für ankommende Rufe zur Centrex-Gruppe
- Spezielle Gebührenbehandlung für Centrex-interne Verbindungen
- Amtsberechtigung für ankommende/abgehende Rufe
- Anrufweitergabe
- Anrufübernahme
- Verschiedenartige akustische Signale ("Klingeln")
etc.

Ein weiteres und zugleich wichtiges Leistungsmerkmal für Centrex-Teilnehmer ist die sogenannte Team-Funktion, insbesondere mit der Ausprägung "Vorzimmer"-Funktion bzw. "Chef-/Sekretärin"-Funktion:

An die Teamfunktion werden folgende Anforderungen gestellt:
- Alle oder mehrere Centrex-Teilnehmer werden zu einer Gruppe einem sogenannten Team zusammengefaßt.
- Sämtliche Rufnummern dieser Gruppe stehen allen Team-Mitgliedern zur Verfügung.
- Ein ankommender Anruf zu einer beliebigen Rufnummer einer zu der Gruppe gehörenden Teilnehmerendeinrichtung wird jeder Teilnehmerendeinrichtung signalisiert, wobei das akustische Signal an der Teilnehmerendeinrichtung, an die der Anruf gerichtet ist, verschiedenartig zu den akustischen Signalen an den übrigen Teilnehmerendeinrichtungen sein kann.
- Z.B. über Zustandslämpchen soll an jeder Teilnehmerendeinrichtung der Gruppe der vermittlungstechnische Zustand (z.B. Freizustand, Belegtzustand, Zustand für einen abgehenden Ruf, für eine Rufannahme, Wartezustand, ...) jeder Teilnehmerendeinrichtung angezeigt werden.
- Ein ankommender Ruf soll an jeder Teilnehmerendeinrichtung mit den der angewählten Rufnummer entsprechenden Merkmalen (z.B. Berechtigungen ) entgegengenommen werden können.
- Abgehende Rufe sollen von jeder Teilnehmerendeinrichtung mit den der Rufnummer des rufenden Teilnehmers entsprechenden Merkmalen initiiert werden können.
- Die vermittlungstechnischen sowie administrativen Abläufe beim Verbindungsaufbau- bzw. -abbau von ankommenden und abgehenden Rufen sollen weiterhin standardgemäß durchgeführt werden können.

Der bisher bekannte Ablauf zum Verbindungsaufbau bzw. -abbau von ankommenden bzw. abgehenden Rufen innerhalb einer digitalen Fernmeldevermittlungsstelle kann den oben genannten Anfordungen nicht Rechnung tragen.

Beim bekannten Ablauf zum Verbindungsaufbau bzw. -abbau wird ein ankommender Ruf an alle Teilnehmerendeinrichtungen einer Centrex-Untergruppe (Team) signalisiert und in Richtung zu jeder Teilnehmerendeinrichtung eine Nutzverbindung durch die digitale Fernmeldevermittlungsstelle geschaltet. Diejenige gerufene Teilnehmerendeinrichtung, durch die die Verbindung durch Schleifenschluß entgegennimmt, erhält den Anruf. Zu den übrigen Teilnehmerendeinrichtungen geschaltete Verbindungen werden in der digitalen Fernmeldevermittlungsstelle ausgelöst.

Eine von einem Centrex-Untergruppenteilnehmer initiierter abgehender Ruf wird wie gewöhnlich durchgeführt. Der erläuterte bekannte Ablauf zum Verbindungsaufbau bzw. -abbau kann - wie bereits erwähnt - kaum einer der zuvor genannten Anforderungen zur Teamfunktion gerecht werden. Vor allem mangelt es bei der bekannten Vorgehensweise an den Zustandsinformationen für alle dem "Team" angehörenden Teilnehmerendeinrichtungen sowie an der den Teilnehmermerkmalen entsprechenden Durchführung einer Rufannahme bzw. einer Belegung durch einen abgehenden Ruf.

Des weiteren ist aus der US-Patentschrift 5,920,619 eine regionales Telefonnetzsystem bekannt, das Centrex-Dienste anbietet, wobei eine geschlossene Teilnehmergruppe als Untergruppen auf verschiedene Telefonvermittlungsstellen verteilt sind. Die Verwaltung der Teilnehmergruppen kann derart implementiert sein, daß eine tabellen-typische Teilnehmerdatenbasis in jeder Vermittlungsstelle mit mindestens einer der geschlossenen Teilnehmergruppe zugeordneten Teilnehmern gespeichert ist. Die Datenbasis ist mit dieser Teilnehmergruppe verbunden und enthält alle notwendigen Informationen zur Implementierung der Centrex-Dienste, so daß, wenn die Anrufsteuerung der Vermittlungsstelle auf der Grundlage der Teilnehmerdaten feststellt, daß der Teilnehmer zu einer geschlossenen Teilnehmergruppe gehört, sie die Teilnehmerdaten während des Rufaufbaus nutzen kann. Die bekannte Lösung ist jedoch auf die Implementierung von Teilnehmergruppen innerhalb eines auf mehrere Vermittlungsstellen verteiltes Centrex-System fokussiert, so dass auch dieser Ansatz keine zufriedenstellende Lösung zu dem vorstehend beschriebenen Problem liefert.

Die Aufgabe der Erfindung besteht nun darin, ein Verfahren der im Oberbegriff des Patentanspruchs 1 angegebenen Art dahingehend auszugestalten, daß die genannten Anforderungen an mit Teilnehmergruppen in Zusammenhang stehenden Leistungsmerkmale erfüllt werden können.

Diese Aufgabe wird durch die im Kennzeichen des Anspruchs 1 angegebenen Merkmale gelöst. Vorteilhafte Ausgestaltungen der Erfindung sind in Unteransprüchen gekennzeichnet.

Erfindungsgemäß wird dies dadurch erreicht, daß in den eingangs genannten Fällen bei einem ankommenden oder abgehenden Ruf in der digitalen Fernmeldevermittlungsstelle zusätzlich zu der in der Fernmeldevermittlungsstelle durchgeschalteten physikalischen Verbindung, über die Signalisierungs- und Nutzinformationen übertragen werden können, jeweils eine sogenannte virtuelle Verbindung von der rufenden Teilnehmerendeinrichtung zu der einen oder den weiteren Teilnehmerendeinrichtungen der Teilnehmergruppe hergestellt wird. Über die mindestens eine virtuelle Verbindung werden nur Signalisierungsinformationen übertragen. Erst wenn eine der weiteren Teilnehmerendeinrichtungen den ankommenden oder abgehenden Ruf entgegen- bzw. übernimmt, werden Nutzinformationen über die digitale Fernmeldevermittlungsstelle von bzw. zur Teilnehmerendeinrichtung übertragen. Zur Übertragung von Nutzinformationen wird in der Fernmeldevermittlungsstelle eine Verbindung physikalisch durchgeschaltet.

Durch Signalisierungsinformation, die über die zumindest eine virtuelle Verbindung übermittelbar sind, kann der mindestens einen weiteren Teilnehmerendeinrichtung der Zustand der Teilnehmerendeinrichtung mitgeteilt werden, die den Ruf annimmt bzw. von der der Ruf ausgeht.

Aufgrund des Umstandes, daß die virtuelle Verbindung dem Teilnehmer wie eine echte physikalische Verbindung erscheint, können die Leistungsmerkmale der Teamfunktion sowohl mit in der Teilnehmergruppe gleichberechtigten Teilnehmerendeinrichtungen als auch mit in der Teilnehmergruppe unterschiedlich zu behandelnden Teilnehmerendeinrichtungen (z.B. Chef-/Sekretärin-Funktion) abgewickelt werden.

Eine vorteilhafte Ausgestaltung der Erfindung sieht folgendes vor:

Sämtliche Rufnummern der Teilnehmergruppe stehen an allen Teilnehmerendeinrichtungen zur Verfügung, wobei jeder Teilnehmerendeinrichtung eine Rufnummer als sogenannte primäre Rufnummer zugeordnet ist. Die übrigen Rufnummern innerhalb der Teilnehmergruppe sind der jeweiligen Teilnehmerendeinrichtung als sogenannte assoziierte Rufnummern zugeordnet. Mit anderen Worten ausgedrückt, jeder Teilnehmerendeinrichtung der Teilnehmergruppe ist sowohl eine primäre Rufnummer als auch mindestens eine assoziierte Rufnummer zugeordnet, die jeweils der primären Rufnummer der mindestens einen weiteren Teilnehmerendeinrichtung der Teilnehmergruppe entspricht.

Der Vorteil dieser Rufnummernzuordnung besteht darin, daß ein ankommender Ruf, der durch Wahl einer Rufnummer an eine Teilnehmerendeinrichtung gerichtet ist, der die gewählte Rufnummer als primäre Rufnummer zugeordnet ist, physikalisch durchgeschaltet wird, während der Ruf an die anderen Teilnehmerendeinrichtungen, denen jeweils die gewählte Rufnummer als assoziierte Rufnummer zugeordnet ist, nicht über eine physikalische sondern über eine virtuelle Verbindung zugestellt und damit angezeigt wird. Durch die Art des akustischen Signals (z.B. Klingeln, Aufmerksamkeitston) kann zwischen der Teilnehmerendeinrichtung, der die gewählte Rufnummer als primäre Rufnummer zugeordnet ist, und der weiteren bzw. den übrigen Teilnehmerendeinrichtungen, denen die gewählte Rufnummer als assoziierte Rufnummer zugeordnet ist, unterschieden werden. Demnach "klingelt" es an der Teilnehmerendeinrichtung mit angewählter primärer Rufnummer und ein Aufmerksamkeitston ertönt an der weiteren oder den übrigen Teilnehmerendeinrichtungen.

Die Tragfähigkeit der Erfindung zeigt sich insbesondere im Zusammenhang mit weiteren erfindungsgemäßen Ausführungsformen.

Eine Weiterbildung der Erfindung sieht vor, daß bei einer Anrufübernahme eines an eine erste Teilnehmerendeinrichtung gerichteten ankommenden Anrufes durch eine zweite Teilnehmerendeinrichtung der Teilnehmergruppe in der digitalen Fernmeldevermittlungsstelle zur zweiten Teilnehmerendeinrichtung hin eine Verbindung physikalisch durchgeschaltet und der ersten Teilnehmerendeinrichtung eine virtuelle Verbindung zugestellt wird. Das heißt: Von und zur zweiten Teilnehmerendeinrichtung werden Signalisierungs- und Nutzinformationen übertragen, wohingegen von und zur ersten Teilnehmerendeinrichtung nur Signalisierungsinformationen übermittelt werden.

Auf diese ressourcensparende Weise ist es möglich, daß jede Teilnehmerendeinrichtung der Teilnehmergruppe über den aktuellen Zustand bzw. Zustandsänderungen informiert wird und bleibt. Für den Teilnehmer erscheint kein Unterschied zwischen einer physikalisch durchgeschalteten und einer sogenannten virtuellen Verbindung.

Weitere vorteilhafte Ausgestaltungen der Erfindung beziehen sich auf Verfahrensabläufe, die vor einer vermittlungstechnischen Rufbehandlung eines ankommenden bzw. eines abgehenden Rufes stattfinden.

Demnach wird für den Fall, daß ein an eine erste Teilnehmerendeinrichtung gerichteter Anruf nicht durch die erste sondern durch eine zweite Teilnehmerendeinrichtung der Teilnehmergruppe entgegengenommen bzw. übernommen wird, der in der Fernmeldevermittlungsstelle vorhandenen Teilnehmeranschlußgruppe zum Anschluß der zweiten Teilnehmerendeinrichtung zuvor die zur ersten Teilnehmerendeinrichtung gehörenden Teilnehmerinformationen aus einer zentralen Datenbasis der Fernmeldevermittlungsstelle für die Dauer der Verbindung zugewiesen.

Für den Fall, daß ein abgehender Ruf von einer Teilnehmerendeinrichtung unter einer assoziierten Rufnummer anstelle unter der primären Rufnummer ausgeht, wird der in der Fernmeldevermittlungsstelle vorhandenen Teilnehmeranschlußgruppe zum Anschluß der Teilnehmerendeinrichtung zuvor die zur primären Rufnummer gehörenden Teilnehmerinformationen aus einer zentralen Datenbasis der Fernmeldevermittlungsstelle für die Dauer der Verbindung zugewiesen.

Die genannten Teilnehmerinformationen können z.B. Berechtigungen bzw. Einschränkungen, unterschiedliche Gebührenmodelle etc. sein.

Der Vorteil in der vor der vermittlungstechnischen Rufbehandlung ablaufenden Zuweisung der Teilnehmerinformation liegt insbesondere darin, daß die Teilnehmerinformationen den Teilnehmeranschlußgruppen immer aktuell zur Verfügung stehen. Wegen des temporären Charakters der an der Teilnehmeranschlußgruppe lokal zur Verfügung stehenden Teilnehmerinformationen sind keine Konsistenzprüfungen notwendig. Außerdem bleiben die bisherigen standardmäßigen administrativen sowie vermittlungstechnischen Abläufe unverändert. Ferner muß bei sicherungstechnischen Maßnahmen im Falle eines Neustarts nach einem HW-/SW-Fehlers auf diese temporär zugewiesenen Teilnehmerinformationen keine Rücksicht genommen werden.

Nachstehend wird ein Ausführungsbeispiel der Erfindung unter Bezugnahme auf eine Zeichnung näher erläutert.

In der Zeichnung zeigen:
Figur 1 die erfindungsgemäße Behandlung eines ankommenden Rufes,
Figur 2 die erfindungsgemäße Behandlung eines an eine erste Teilnehmerendeinrichtung gerichteten ankommenden Rufes, der durch eine zweite Teilnehmerendeinrichtung entgegen- bzw. übernommen wird und
Figur 3 die erfindungsgemäße Behandlung eines abgehenden Rufes, der von einer Teilnehmerendeinrichtung anstelle unter der primären Rufnummer unter einer assoziierten Rufnummer initiiert wird.

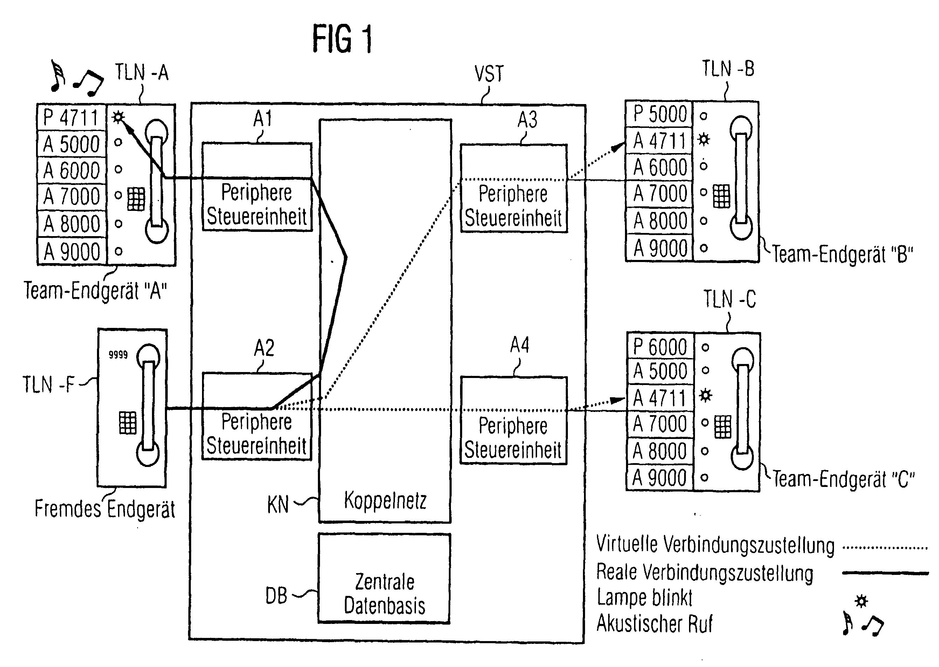

Figur 1 zeigt eine digitale Fernmeldevermittlungsstelle VST mit einer Centrex-Funktionalität. An die digitale Fernmeldevermittlungsstelle sind über Teilnehmeranschlußleitungen mehrere durch Telefonapparate gekennzeichnete Teilnehmerendeinrichtungen z.B. TLN-A, TLN-B, TLN-C und TLN-F angeschlossen, wobei beispielsweise die Teilnehmerendeinrichtungen TLN-A, TLN-B und TLN-C ein Team innerhalb einer Centrex-Gruppe bilden. Die Teilnehmerendeinrichtung TLN-F sei im folgenden als fremde Teilnehmerendeinrichtung benannt, da diese nicht zum Team gehört.

Ferner sind in der Figur 1 schematisch einige Komponenten einer in einem Telekommunikationsnetz üblicherweise eingesetzten digitalen Fernmeldevermittlungsstelle dargestellt: Ein Koppelnetz KN, eine zentrale Datenbasis DB sowie Teilnehmeranschlußgruppen z.B. A1, A2, A3 und A4 zum Anschluß von Teilnehmerendeinrichtungen z.B. TLN-A, TLN-F, TLN-B und TLN-C.

Die auf den Telefonapparaten abgebildeten Nummern deuten die der jeweiligen Teilnehmerendeinrichtung zugeordneten Rufnummern an. Beispielsweise ist auf der Teilnehmerendeinrichtung TLN-F die Rufnummer "9999" dargestellt. Diese Rufnummern sind nur symbolisch zu verstehen. In der Realität werden in einem Telekommunikationsnetz normierte Rufnummern z.B. E.164 verwendet.

Die zum Team gehörenden Teilnehmerendeinrichtungen TLN-A, TLN-B und TLN-C weisen verschiedenartige Rufnummern auf. Die mit einem voranstehenden Zeichen "P" gekennzeichneten Nummern entsprechen der der jeweiligen Teilnehmerendeinrichtung innerhalb des Teams primär zugeordneten Rufnummer (z.B. P4711 ist die primäre Rufnummer der Teilnehmerendeinrichtung TLN-A). Die mit einem voranstehenden Zeichen "A" gekennzeichneten Nummern deuten die der jeweiligen Teilnehmerendeinrichtung assoziierte Rufnummern an, die jeweils der primären Rufnummern der übrigen im Team vorhandenen Teilnehmerendeinrichtungen entsprechen. Z.B. sind auf der Teilnehmerendeinrichtung TLN-A die assoziierten Rufnummern A5000 und A6000 dargestellt, die den primären Rufnummern P5000 der Teilnehmerendeinrichtung TLN-B und der primären Rufnummer P6000 der Teilnehmerendeinrichtung TLN-C entsprechen. Die übrigen auf den Teilnehmerendeinrichtungen angedeuteten assoziierten Rufnummern symbolisieren, daß noch weitere nicht in der Figur dargestellte Teilnehmerendeinrichtungen als zum Team zugehörig vorstellbar sind.

Zusätzlich sind auf den Teilnehmerendeinrichtungen TLN-A, TLN-B und TLN-C kleine Kreise angeordnet, die Zustandslämpchen bzw. Leuchtdioden symbolisieren. Ansonsten werden auf den Teilnehmerendeinrichtungen jeweils noch ein Tastenfeld z.B. zur Eingabe von Rufnummer sowie ein Telefonhörer angedeutet, die für das erfindungsgemäße Verfahren keine spezielle Rolle spielen.

In der Figur werden ferner in Form einer in einem Kästchen abgebildeten Legende die Bedeutungen zu Linienformen bzw. -arten sowie von Zeichensymbolen wiedergegeben.

Im folgenden sei angenommen, daß an der Teilnehmerendeinrichtung TLN-A ein an sie gerichteter Ruf eingeht, der von der fremden Teilnehmerendeinrichtung TLN-F ausgeht. Demnach "klingelt" es an der Teilnehmerendeinrichtung TLN-A. Außerdem "blinkt" das mit der primären Rufnummer "P4711" gekennzeichnete Zustandslämpchen auf der Teilnehmerendeinrichtung TLN-A. In der Fernmeldevermittlungsstelle VST wird zum Verbindungsaufbau physikalisch eine Verbindung von der Teilnehmeranschlußgruppe A2 durch das Koppelnetz KN zur Teilnehmeranschlußgruppe A1 geschaltet. Über diese Verbindung sind sowohl Signalisierungs- als auch Nutzinformationen übertragbar. Zu den übrigen Teilnehmerendeinrichtungen TLN-B und TLN-C werden erfindungsgemäß von der Teilnehmeranschlußgruppe A2 zu den Teilnehmeranschlußgruppen A3 und A4 jeweils nur sogenannte virtuelle Verbindungen hergestellt. D.h. über diese virtuellen Verbindungen sind lediglich Signalisierungsinformationen übermittelbar. Demzufolge wird den Teilnehmerendeinrichtungen TLN-B und TLN-C der ankommende Ruf in Form eines Aufmerksamkeitstones signalisiert, und auf beiden Endeinrichtungen leuchtet das mit der assoziierten Rufnummer "A4711" gekennzeichnete Zustandslämpchen auf.

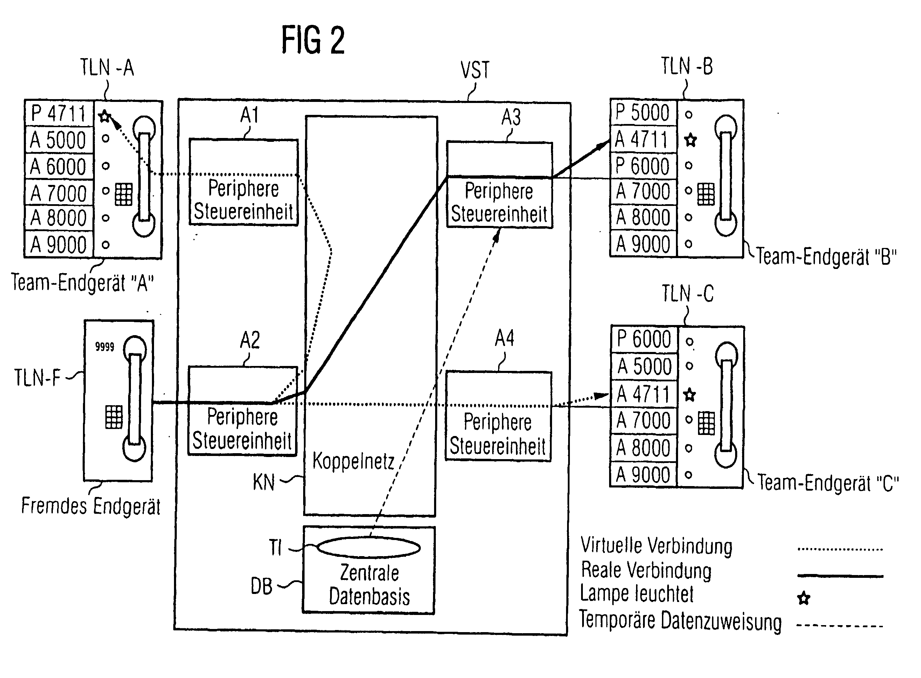

In der Figur 2 sind neben den bereits erläuterten Komponenten zusätzlich in der zentralen Datenbasis DB gespeicherte Teilnehmerinformationen TI z.B. Teilnehmerberechtigungen bzw. -einschränkungen, Gebührenmodelle etc. symbolisiert.

Die Figur 2 zeigt beispielsweise den Fall, daß der in Figur 1 angedeutete ankommende Ruf nicht von der Teilnehmerendeinrichtung TLN-A entgegengenommen wird, sondern z.B. von einem Teammitglied an der Teilnehmerendeinrichtung TLN-B angenommen bzw. übernommen wird. Das Verfahren läuft erfindungsgemäß wie folgt ab:

An der Teilnehmerendeinrichtung TLN-B wird nach der Signalisierung des eingehenden Rufes zunächst z.B. über einen Tastendruck auf die entsprechende Rufnummerntaste (assoziierte Rufnummer) in dem symbolisierten Tastenfeld der Wunsch zur Annahme des Rufes an die Fernmeldevermittlungsstelle signalisiert. Danach wird der Teilnehmeranschlußgruppe A3 die in der Datenbasis DB gespeicherten Teilnehmerinformationen zur Teilnehmerendeinrichtung TLN-A zur lokalen temporären Speicherung zugewiesen. Anschließend wird die zuvor vorhandene virtuelle Verbindung von der Teilnehmeranschlußgruppe A2 zur Teilnehmeranschlußgruppe A3 in eine physikalische Verbindung umgewandelt, so daß dadurch nicht nur Signalisierungsinformationen sondern auch Nutzinformationen von und zur Teilnehmerendeinrichtung TLN-B übertragbar sind. Mit anderen Worten ausgedrückt, der eingegangene Ruf wird zur Teilnehmerendeinrichtung TLN-B durchgestellt und die Verbindung wird durch Schleifenschluß auf der TLN-B-Seite hergestellt.

Hierbei wird die zur Teilnehmerendeinrichtung TLN-C vorhandene virtuelle Verbindung beibehalten und die zur Teilnehmerendeinrichtung TLN-A durchgeschaltete physikalische Verbindung wird in eine virtuelle Verbindung umgewandelt, so daß von und zur Teilnehmerendeinrichtung TLN-A nur noch Signalierungsinformationen gelangen.

Die Durchschaltung der physikalischen Verbindung zur Teilnehmerendeinrichtung TLN-B (Rufannahme) führt auch dazu, daß das Zustandslämpchen "A4711" nicht mehr blinkt, sondern stetig leuchtet. Auch den übrigen Teilnehmerendeinrichtungen TLN-A und TLN-C wird die Zustandsänderung über die virtuellen Verbindungen signalisiert, so daß auf der Endeinrichtung TLN-A das Zustandslämpchen "P4711" und auf der Endeinrichtung TLN-C das Zustandslämpchen "A4711" stetig leuchtet.

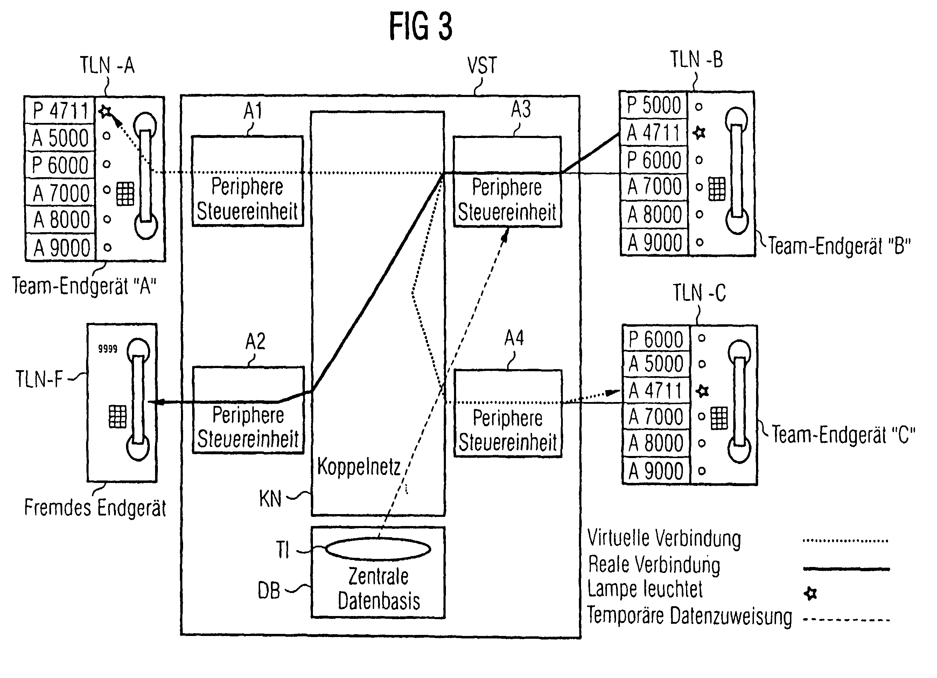

Die Figur 3 zeigt den Fall eines abgehenden Rufes. Hierbei entsprechen die in der Figur 3 dargestellten Komponenten denen der Figur 2.

Es wird auch davon ausgegangen, daß ein abgehender Ruf von einer Teilnehmerendeinrichtung z.B. TLN-B unter einer assoziierten Rufnummer anstelle unter der primären Rufnummer initiiert wird. Hierbei wird der Fernmeldevermittlungsstelle signalisiert, daß der Ruf zwar von der Teilnehmerendeinrichtung TLN-B aus aufgebaut werden soll, jedoch die Teilnehmerinformationen zur Teilnehmerendeinrichtung TLN-A zum Verbindungsaufbau verwendet werden sollen. Demzufolge werden der Teilnehmeranschlußgruppe A3 zunächst die Teilnehmerinformationen TI zur Teilnehmerendeinrichtung TLN-A zur lokalen temporären Speicherung zugewiesen. Danach wird ein Verbindungsaufbau zur gewünschten Teilnehmerendeinrichtung z.B. TLN-F in der üblichen Weise durchgeführt. In der Fernmeldevermittlungsstelle wird durch das Koppelnetz eine physikalische Verbindung von der Teilnehmeranschlußgruppe A3 zur Teilnehmeranschlußgruppe A2 geschaltet, auf der sowohl Signalisierungs- als auch Nutzinformationen übertragbar sind. Zu den übrigen Teilnehmerendeinrichtungen z.B. TLN-A und TLN-C des Teams werden jeweils die bereits erläuterten virtuellen Verbindungen in der Fernmeldevermittlungsstelle hergestellt. Entsprechende Zustandsinformationen bzw. Zustandsänderungen können somit an jede Teilnehmerendeinrichtung des Teams signalisiert werden. So leuchtet auf der Teilnehmerendeinrichtung TLN-A das Zustandslämpchen "P4711", auf der Teilnehmerendeinrichtung TLN-B das Zustandslämpchen "A4711" und auf der Teilnehmerendeinrichtung TLN-C das Zustandslämpchen "A4711" auf.

Der zentrale erfindungsgemäße Gedanke, daß innerhalb einer Teilnehmergruppe eine Teilnehmerendeinrichtung eine "reale" Verbindung zur Übertragung von Signalisierungs- und Nutzinformationen hält und den übrigen Teilnehmerendeinrichtungen der Teilnehmergruppe jeweils nur "virtuelle" Verbindungen zugestellt werden, ist nicht auf die vorstehend beschriebenen Bespiele beschränkt. Andere Varianten zur Behandlung einer Rufannahme, -übernahme oder auch der Rufweitergabe sowie zur Behandlung von abgehenden Rufen bezogen auf Teilnehmergruppen sind jederzeit denkbar.

## Patentansprüche

1. Verfahren zur Behandlung eines an eine Teilnehmerendeinrichtung (TLN-A) einer Teilnehmergruppe ankommenden Anrufes oder eines von einer solchen Teilnehmerendeinrichtung (TLN-B) abgehenden Rufes innerhalb einer digitalen Fernmeldevermittlungsstelle eines Telekommunikationsnetzes, wobei der Teilnehmergruppe mindestens eine weitere Teilnehmerendeinrichtung (TLN C; TLN-A oder TLN-B) zugeordnet ist und wobei
- bei einem ankommenden Anruf in der digitalen Fernmeldevermittlungsstelle (VST) eine Verbindung zur Übertragung von Signalisierungs- und Nutzinformationen zwischen einer beliebigen rufenden Teilnehmerendeinrichtung (TLN-F) und der den Anruf annehmenden Teilnehmerendeinrichtung (TLN-B) der Teilnehmergruppe
- oder bei einem abgehenden Ruf in der digitalen Fernmeldevermittlungsstelle (VST) eine Verbindung zur Übertragung von Signalisierungs- und Nutzinformationen zwischen der rufenden Teilnehmerendeinrichtung (TLN-B) der Teilnehmergruppe und einer beliebigen gerufenen Teilnehmerendeinrichtung (TLN-F) geschaltet wird,
**dadurch gekennzeichnet,**
- **daß** in den genannten Fällen in der digitalen Fernmeldevermittlungsstelle zusätzlich jeweils eine Verbindung zur Übertragung von reinen Signalisierungsinformationen zwischen der rufenden Teilnehmerendeinrichtung (TLN-A oder TLN-B) und der mindestens einen weiteren Teilnehmerendeinrichtung (TLN-C; TLN-A oder TLN-B) der Teilnehmergruppe hergestellt wird.

2. Verfahren nach Anspruch 1, **dadurch gekennzeichnet, daß** jeder Teilnehmerendeinrichtung (TLN-A, TLN-B, TLN-C) der Teilnehmergruppe eine primäre Rufnummer und mindestens eine assoziierte Rufnummer zugeordnet ist, die jeweils der primären Rufnummer der mindestens einen weiteren Teilnehmerendeinrichtung der Teilnehmergruppe entspricht.

3. Verfahren nach Anspruch 1 oder 2, **dadurch gekennzeichnet, daß** bei einer Anrufübernahme eines an eine erste Teilnehmerendeinrichtung (TLN-A) der Teilnehmergruppe gerichteten ankommenden Anrufes durch eine zweite Teilnehmerendeinrichtung (TLN-B) der Teilnehmergruppe in der digitalen Fernmeldevermittlungsstelle (VST) zur zweiten Teilnehmerendeinrichtung eine Verbindung zur Übertragung von Signalisierungs- und Nutzinformationen geschaltet und zur ersten Teilnehmerendeinrichtung nur eine Verbindung zur Übertragung von reinen Signalisierungsinformationen aufrechtgehalten wird.

4. Verfahren nach einem der vorhergehenden Ansprüche, **dadurch gekennzeichnet, daß** vor einer Anrufannahme oder Anrufübernahme des an eine erste zur Teilnehmergruppe gehörenden Teilnehmerendeinrichtung (TLN-A) gerichteten ankommenden Anrufes durch eine zweite zur Teilnehmergruppe (TLN-B) gehörenden Teilnehmerendeinrichtung der in der digitalen Fernmeldevermittlungsstelle (VST) vorhandenen Teilnehmeranschlußgruppe (A3) zum Anschluß der zweiten Teilnehmerendeinrichtung die zur ersten Teilnehmerendeinrichtung gehörenden Teilnehmerinformationen (TI) aus einer zentralen Datenbasis (DB) der digitalen Fernmeldevermittlungsstelle für die Dauer der Verbindung zugewiesen werden.

5. Verfahren nach einem der Ansprüche 2 bis 3, **dadurch gekennzeichnet, daß** vor der Initiierung eines abgehenden Rufes, der von einer Teilnehmerendeinrichtung (TLN-B) unter einer assoziierten Rufnummer anstelle unter der primären Rufnummer ausgeht, die in der digitalen Fernmeldevermittlungsstelle (VST) vorhandenen Teilnehmeranschlußgruppe (A3) zum Anschluß der Teilnehmerendeinrichtung die zur primären Rufnummer gehörenden Teilnehmerinformationen (TI) aus einer zentralen Datenbasis (DB) der digitalen Fernmeldevermittlungsstelle für die Dauer der Verbindung zugewiesen werden.

## Claims

1. Method for processing an incoming call to a subscriber terminal (TLN-A) of a subscriber group or an outgoing call from such a subscriber terminal (TLN-B) within a digital telecommunication switching centre of a telecommunication network, with at least one further subscriber terminal (TLN-C; TLN-A or TLN-B) being assigned to the subscriber group and whereby
- in the event of an incoming call a connection for the transmission of signalling and useful information is switched in the digital telecommunication switching centre (VST) between any calling subscriber terminal (TLN-F) and the subscriber terminal (TLN-B) of the subscriber group receiving the call
- or if there is an outgoing call, a connection for the transmission of signalling and useful information is switched in the digital telecommunication switching centre (VST) between the calling subscriber terminal (TLN-B) of the subscriber group and any called subscriber terminal (TLN-F),
**characterised in that**
- in the named cases a connection for the transmission of pure signalling information is also established in the digital telecommunication centre between the calling subscriber terminal (TLN-A or TLN-B) and the at least one further subscriber terminal (TLN-C; TLN-A or TLN-B) of the subscriber group.

2. Method in accordance with claim 1, **characterised in that** each subscriber terminal (TLN-A, TLN-B, TLN-C) of the subscriber group is assigned a primary telephone number and at least one associated telephone number, which in each case corresponds to the primary telephone number of the at least one further subscriber terminal device of the subscriber group.

3. Method in accordance with claim 1 or 2, **characterised in that** during a call pickup by a second subscriber terminal (TLN-B) of the subscriber group of an incoming call directed to a first subscriber terminal (TLN-A) of the subscriber group, a connection is switched through in the digital telecommunication switching centre (VST) to the second subscriber terminal for the transmission of signalling and useful information and only a connection for the transmission of pure signalling information is maintained to the first subscriber terminal.

4. Method in accordance with one of the preceding claims, **characterised in that** before a call acceptance or call pickup of the incoming call directed to a first subscriber terminal (TLN-A) belonging to the subscriber group, by a second subscriber terminal belonging to the subscriber group (TLN-B), the subscriber connection group (A3) present in the digital telecommunication switching centre (VST) is assigned the subscriber information (TI) belonging to the first subscriber terminal, for connection of the second subscriber terminal, from a central database (DB) of the digital telecommunication switching centre for the duration of the connection.

5. Method in accordance with one of claims 2 to 3, **characterised in that** before initiating an outgoing call that is transmitted from a subscriber terminal (TLN-B) under an associated telephone number instead of under the primary telephone number, the subscriber connection group (A3) present in the digital telecommunication switching centre (VST) for connection of the subscriber terminal is assigned the subscriber information (TI) belonging to the primary telephone number, for connection of the subscriber terminal, from a central database (DB) of the digital telecommunication switching centre for the duration of the connection.

## Revendications

1. Procédé de traitement d'un appel arrivant à un terminal (TLN-A) d'abonnés d'un groupe d'abonnés ou d'un appel partant d'un terminal (TLN-B) d'abonnés de ce genre, dans un central de commutation numérique d'un réseau de télécommunication, au moins un autre terminal (TLN-C ; TLN-A ou TLN-B) d'abonné étant associé au groupe d'abonnés et dans lequel
- pour un appel arrivant, on établit dans le central (VST) de commutation numérique, une connexion de transmission d'informations de signalisation et utiles entre un terminal (TLN-F) d'abonné appelant quelconque et le terminal (TLN-B), acceptant l'appel, du groupe d'abonnés,
- ou pour un appel partant on établit dans le central (VST) de commutation numérique, une connexion de transmission d'informations de signalisation et utiles entre le terminal (TLN-B) d'abonné appelant du groupe d'abonnés et un terminal (TLN-F) d'abonné appelé quelconque,
**caractérisé**
- **en ce que** dans les cas mentionnés, on ménage dans le central de commutation numérique en plus respectivement une connexion, pour la transmission d'informations de signalisation pures, entre le terminal (TLN-A ou TLN-B) d'abonné appelant et le au moins un autre terminal (TLN-C, TLN-A ou TLN-B) d'abonné du groupe d'abonnés.

2. Procédé suivant la revendication 1, **caractérisé en ce qu'**il est associé à chaque terminal (TLN-A, TLN-B, TLN-C) d'abonné du groupe d'abonnés, un numéro d'appel primaire et au moins un numéro d'appel associé, qui correspond respectivement au numéro d'appel primaire du au moins un autre terminal d'abonné du groupe d'abonnés.

3. Procédé suivant la revendication 1 ou 2, **caractérisé en ce que**, pour une prise d'un appel arrivant, dirigé sur un premier terminal (TLN-A) d'abonné du groupe d'abonnés, par un deuxième terminal (TLN-B) d'abonné du groupe d'abonnés, on établit dans le central (VST) de commutation numérique, une connexion vers le deuxième terminal d'abonné de transmission d'informations de signalisation et utiles, et ,pour le premier terminal d'abonné, on ne maintient qu'une connexion de transmission d'informations de signalisation pures.

4. Procédé suivant l'une des revendications précédentes, **caractérisé en ce qu'**avant une acceptation ou une prise de l'appel arrivant, dirigé sur un premier terminal (TLN-A) d'abonné appartenant au groupe d'abonnés, par un deuxième terminal d'abonné appartenant au groupe (TLN-B) d'abonnés du groupe (A3) de raccordement d'abonnés présent dans le central (VST) de commutation numérique on attribue, pour le raccordement du deuxième terminal d'abonné, des informations (TI) d'abonnés appartenant au premier terminal d'abonné, en provenance d'une base (DB) centrale de données du central de commutation numérique pour la durée de la connexion.

5. Procédé suivant l'une des revendications 2 à 3, **caractérisé en ce qu'**avant le début d'un appel partant qui part d'un terminal (TLN-B) d'abonné sous un numéro d'appel associé au lieu du numéro d'appel primaire, il est associé au groupe (A3) de raccordement d'abonnés présent dans le central (VST) de commutation numérique, pour le raccordement du deuxième terminal d'abonné, les informations (TI) d'abonné appartenant au numéro d'appel primaire, en provenance d'une base (DB) centrale de données du central de commutation numérique pour la durée de la connexion.
